# EUROPÄISCHE PATENTANMELDUNG

(11) **EP 2 439 025 A1**
(43) Veröffentlichungstag der Anmeldung: **11.04.2012**
(21) Anmeldenummer: 11167559.1
(22) Anmeldetag: 26.05.2011
(51) Int. Cl.: B25H 1/00

(54) **Fertigungsträgermodul**

(30) Priorität: 06.10.2010 DE 102010042086
(71) Anmelder: SIEMENS AKTIENGESELLSCHAFT, 80333 München (DE)
(72) Erfinder: Kaußler, Johann, 92521 Schwarzenfeld (DE)

(57) **Zusammenfassung**

Ein trapezförmiges Fertigungsträgermodul, beispielsweise eine Werkbank oder ein Arbeitstisch, lässt sich mit gleichartigen Modulen flexibel linear oder in Wabenform aufstellen. So wird ein modular konfigurierbares Fertigungssystem zusammengestellt, welches ein wesentlich niedrigeres Investitionsrisiko im Hinblick auf mögliche Veränderungen und Anpassungen bezüglich der zu fertigenden Produkte, Stückzahlen und technologischen Prozesse aufweist. In einer Weiterbildung werden die Module mit Fertigungseinheiten wie Schweissköpfen, Lotbandvorschüben oder Bohreinheiten ausgerüstet und wabenförmig angeordnet. Ein zentral angeordneter Drehteller ermöglicht dann einem Bediener Zugriff auf sämtliche Fertigungseinheiten. Weiterhin wird für jede Fertigungseinheit eine eigene Steuereinheit vorgesehen, welche am jeweiligen Modul montiert wird und über eine standardisierte Schnittstelle verfügt. So kann jedes Modul unmittelbar durch ein Modul mit gleicher oder anderer Funktionalität ausgetauscht werden.

## Beschreibung

Die Erfindung betrifft ein Fertigungsträgermodul im Bereich der Montagetechnik, beispielsweise für den Sondermaschinenbau. Als Fertigungsträgermodul wird ein Tisch, ein Handarbeitsplatz, eine Werkbank oder ein beliebiges anderes Element verstanden, welches einzeln oder in Verbindung mit anderen Fertigungsträgermodulen aufgestellt wird und einen oder mehrere Arbeitsschritte in einem einfachen oder komplexen Montageablauf ermöglicht. Die entsprechenden Schritte werden vollautomatisiert, teilautomatisiert oder händisch durchgeführt.

Ein solches Fertigungsträgermodul ist beispielsweise aus dem Dokument "Quadro - das Arbeitsplatzsystem für höchste Ansprüche" bekannt, erhältlich im Internet am 13.05.2011 unter http://www.karlnet.de/site/haupt-navigation/arbeitsplatzsysteme/quadro.html. Das in dem Dokument gezeigte Arbeitsplatzsystem besteht im Wesentlichen aus zwei rechtwinkligen Schreibtischen, welche über ein Verbindungselement miteinander verbunden sind. Der rechte Schreibtisch verfügt über einen Überbau mit elektronischen Elementen. Ein solcher Arbeitsplatz kann für Arbeitsschritte in der Montagetechnik genutzt werden. In diesem Fall handelt es sich bei jedem Schreibtisch um ein Fertigungsträgermodul, auf dem Arbeitsschritte für die Fertigung vorgenommen werden können.

Ein weiteres Fertigungssystem ist im Dokument "Handarbeitsarbeitsplatz" gezeigt, erhältlich im Internet am 13.05.2011 unter http://www.ems-automation.de/montage1.htm. Dort ist ein rechtwinkliger Arbeitstisch abgebildet, auf dem eine Vielzahl von Fertigungseinrichtungen mit den zugehörigen Steuereinheiten montiert ist.

Ein weiteres Fertigungssystem ist im Dokument "Modulare Fertigungszelle" gezeigt, erhältlich im Internet am 13.05.2011 unter http://www.deufel-robomed.de/index.php?option= com_content&view=article&id=33&Itemid=8. Gezeigt ist ein flexibles Modulplatten-System in Kombination mit einem Industrieroboter zur vollautomatischen Durchführung von Arbeitsschritten.

Die genannten Fertigungssysteme werden je nach Verwendungszweck aus diversen, unterschiedlich geformten Fertigungsträgermodulen wie etwa unterschiedlich geformten Tischplatten zusammengefügt. Die Fertigungssysteme werden hierbei für eine hohe Produktivität, ein bestimmtes Produktspektrum und eine konstant hohe Stückzahl optimiert.

Der Erfindung liegt die Aufgabe zugrunde, ein Fertigungsträgermodul anzugeben, welches eine Alternative zum Stand der Technik bereitstellt. Diese Aufgabe wird durch ein Fertigungsträgermodul gelöst, welches dadurch gekennzeichnet ist, dass die Außenkanten des Fertigungsträgermoduls ein symmetrisches Trapez bilden.

Das Fertigungssystem besteht aus mehreren zu einer Wabenform verketteten Fertigungsträgermodulen. Es beinhaltet ferner ein zentral angeordnetes Modul mit einem Drehteller, welcher einem Bediener an einem ersten Fertigungsträgermodul des Fertigungssystems eine Nutzung einer Fertigungseinheit, welche an einem zweiten Fertigungsträgermodul des Fertigungssystems montiert ist, erlaubt.

Bei dem Fertigungsträgermodul handelt es sich also um ein Element, welches von oben betrachtet die Form eines symmetrischen Trapezes aufweist. Ein Trapez ist ein Viereck mit zwei parallelen Grundseiten und zwei weiteren Seiten, welche als Schenkel bezeichnet werden. Bei einem symmetrischen Trapez im Sinne der Erfindung sind die Grundseiten unterschiedlich lang und die Schenkel gleichlang.

Diese charakteristische Form erlaubt den Zusammenbau der Fertigungsträgermodule zu einem Fertigungssystem sowohl in Linienform als auch als Rundtisch mit Wabenform. So lässt sich ein modular konfigurierbares Fertigungssystem zusammenstellen, welches ein wesentlich niedrigeres Investitionsrisiko im Hinblick auf mögliche Veränderungen und Anpassungen bezüglich der zu fertigenden Produkte, Stückzahlen und technologischen Prozesse aufweist. Im Gegensatz zum Stand der Technik sind die Fertigungsträgermodule mit ihrer charakteristischen Trapezform wesentlich flexibler hinsichtlich der Umgestaltung von Fertigungsabläufen und -umgebungen.

In der Montagetechnik für den traditionellen Sondermaschinenbau wird eine Spezialisierung auf einen Aufgabenbereich angestrebt. Darum wird eine Formänderung des jeweiligen Fertigungssystems durch unterschiedliche Anordnungen der Fertigungsträgermodule im Stand der Technik gerade nicht unterstützt. Dementsprechend weisen die im Stand der Technik verwendeten Fertigungsträgermodule individuelle und für den jeweiligen Anwendungszweck optimierte Abmessungen auf, welche keine flexible Anordnung erlauben.

Die charakteristische Trapezform des Fertigungsträgermoduls bildet einen gegensätzlichen Gestaltungsansatz. Durch die Trapezform wird die gängige starre Auslegung von Fertigungssystemen, welche für hohe Produktivität, ein bestimmtes Produktspektrum und konstant hohe Stückzahlen optimiert ist, aufgebrochen. Dies ermöglicht ein deutlich niedrigeres Investitionsrisiko im Hinblick auf mögliche Veränderungen der Produkte, technologischen Prozesse und Stückzahlen.

Das Fertigungssystem wird im Gegensatz zum Stand der Technik aus mehreren Fertigungsträgermodulen mit Trapezform zusammengesetzt. Dadurch wird es möglich, das Fertigungssystem entweder mit gegeneinander versetzten Fertigungsträgermodulen in Linienform aufzubauen oder, wenn alle Fertigungsträgermodule mit der längeren Grundseite nach außen gewandt zusammengesetzt werden, als Rundtisch mit charakteristischer Wabenform.

Das Fertigungssystem weist den Vorteil auf, dass bei einer ungewissen Marktlage zunächst eine Minimalkonfiguration des Fertigungssystems aufgebaut werden kann, welche mit zunehmender Sicherheit der wirtschaftlichen Daten stufenweise erweitert wird. Dies bedeutet, dass die Wahl der Anlagenkapazität entsprechend des zum Zeitpunkt der Beschaffung tatsächlich gegebenen Kapazitätsbedarfs erfolgt, was die Leerkosten und eine Kapitalbindung reduziert. Diese Konstruktionssystematik erfüllt zwei elementare Forderungen einer modernen und flexiblen Fertigung, nämlich der Forderung nach Standort-Neutralität und Stückzahl-Neutralität.

Gemäß einer Ausführungsform ist eine Fertigungseinheit, insbesondere eine Schweißeinheit, ein Lotbandvorschub oder eine Bohreinheit, auf dem Fertigungsträgermodul montiert. Diese Ausführungsform hat u.a. den Vorteil, dass auch von benachbart angeordneten Fertigungsträgermodulen bzw. Arbeitsplätzen auf die Fertigungseinheit des Fertigungsträgermoduls zugegriffen werden kann.

In einer Weiterbildung weist das Fertigungsträgermodul eine Steuereinheit auf, welche eine Steuerung der Fertigungseinheit bereitstellt. Die Steuereinheit weist eine einheitliche Schnittstelle auf, sodass das Fertigungsträgermodul durch ein Fertigungsträgermodul mit gleicher oder abweichender Funktionalität unmittelbar austauschbar ist. Diese Weiterbildung ermöglicht "plug and produce", ein innovatives Gestaltungsprinzip für die Produktionstechnik, welches im Wesentlichen durch den modularen Aufbau von Maschinen und Anlagen in Verbindung mit standardisierten, aufwandsminimiert lösbaren Schnittstellen charakterisiert wird. Dieser Aspekt einer flexiblen Wieder- und Weiterverwendbarkeit wird noch dadurch erhöht, dass die Steuereinheit an jedes einzelne Fertigungsträgermodul gekoppelt wird, wodurch flexible und schnell anpassbare Fertigungs- und Montageabfolgen ermöglicht werden. Außerdem wird dadurch der Austausch einzelner Fertigungsträgermodule vereinfacht, beispielsweise um eine Schweiß- durch eine Bohreinheit zu ersetzen. Ein solches aus standardisierten Fertigungsträgermodulen konfiguriertes Fertigungssystem weist ein wesentlich niedrigeres Investitionsrisiko im Hinblick auf mögliche Veränderungen der Produkte, technologischen Prozesse und Stückzahlen auf. Die vielfältige und relativ einfache Kombinierbarkeit der Fertigungsträgermodule minimiert Platzbedarf, spart Kosten ein und erhöht die Auslastung der vorhandenen Fertigungseinheiten.

Gemäß einer Ausführungsform weist das Fertigungsträgermodul eine Stützkonstruktion auf, auf welcher eine Aufnahmeplattform montiert ist und an welcher die Steuereinheit unterhalb der Aufnahmeplattform montiert ist. Diese Ausführungsform hat den Vorteil, dass die Steuereinheit außerhalb des Arbeitsbereichs der Fertigungseinheit und ggf. eines Bedieners angeordnet ist, wodurch die Steuereinheit vor versehentlicher Beschädigung oder Manipulation geschützt und der verfügbare Arbeitsplatz optimiert wird.

In einer Weiterbildung ist die Aufnahmeplattform eine Tischplatte.

Gemäß einer Ausführungsform weist das Fertigungsträgermodul eine Stützkonstruktion auf, auf welcher eine Tischplatte montiert ist. Die Tischplatte weist eine Aussparung für einen Bediener auf. Diese Ausführungsform hat den Vorteil, dass ein Bediener auf einen Drehteller zugreifen kann, welcher in der Mitte einer Mehrzahl von Fertigungsträgermodulen, welche in Wabenform angeordnet sind, platziert ist.

In einer Weiterbildung verfügt das Fertigungsträgermodul über Anschlussmittel, welche so angeordnet sind, dass sie eine Verkettung des Fertigungsträgermoduls mit weiteren Fertigungsträgermodulen sowohl in Linienform als auch in Wabenform erlauben. Dies hat die zuvor bereits angesprochenen Vorteile einer flexiblen Anordnung der Fertigungsträgermodule zu einem Fertigungssystem.

Im Folgenden werden Ausführungsbeispiele der Erfindung anhand von Figuren näher erläutert. Es zeigen:
- Figur 1:: ein Fertigungssystem bestehend aus Fertigungsträgermodulen, welche linear angeordnet sind,
- Figur 2:: ein Fertigungssystem, bestehend aus Fertigungsträgermodulen, welche wabenförmig angeordnet sind,
- Figur 3:: ein Fertigungssystem mit flexibel angeordneten Fertigungsträgermodulen,
- Figur 4:: ein komplexes Fertigungssystem mit acht Drehtellern, um welche jeweils sechs trapezförmige Fertigungsträgermodule angeordnet sind,
- Figur 5:: eine Aufsicht auf das komplexe Fertigungssystem aus Figur 4.

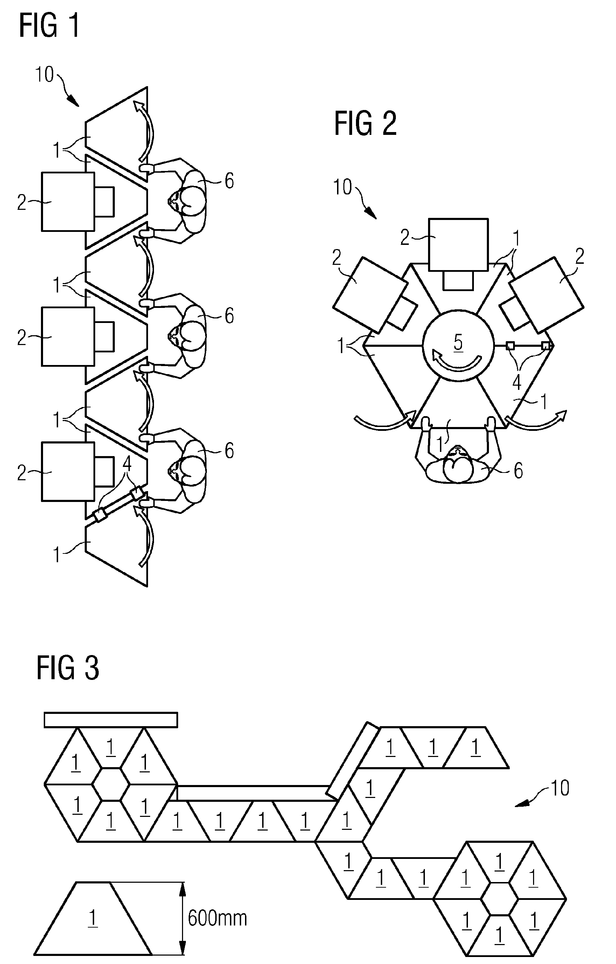

Figur 1 zeigt ein Fertigungssystem 10, welches aus linear angeordneten Fertigungsträgermodulen 1 zusammengesetzt ist. Hierzu verfügen die Fertigungsträgermodule 1 über Anschlussmittel 4, welche eine sichere Verbindung der Fertigungsträgermodule 1 untereinander, beispielsweise durch Verschraubung, gewährleisten. Weiterhin ist auf jedem zweiten Fertigungsträgermodul 1 eine Fertigungseinheit 2 gezeigt, welche von einem Bediener 6 bedient wird.

Figur 2 zeigt ein weiteres Fertigungssystem 10, welches aus wabenförmig angeordneten Fertigungsträgermodulen 1 zusammengesetzt ist. Auch diese Fertigungsträgermodule 1 weisen eine Trapezform auf und sind mittels Anschlussmitteln 4, von denen nur zwei exemplarisch gezeigt sind, miteinander verschraubt bzw. verbunden. In der Mitte der wabenförmigen Anordnung befindet sich ein Drehteller 5, auf welchem Werkstücke in Führungen eingesetzt werden können. Der Drehteller 5 wird daraufhin von einem Bediener 6 in Pfeilrichtung im Uhrzeigersinn gedreht, wodurch das eingesetzte Werkstück sukzessive unterschiedlichen Fertigungseinheiten 2, welche auf den dem Bediener 6 gegenüberliegenden Fertigungsträgermodulen 1 montiert sind, zugeführt wird. Beispielsweise erfolgt ein Verlöten zweier Werkstücke durch die links oben gezeigte Fertigungseinheit 2, wozu die in der Mitte oben gezeigte Fertigungseinheit 2 vollautomatisch ein Lotband zuführt. Weiterhin zeigt Figur 2 Pfeile auf der linken und rechten Seite des Bedieners 6. Diese deuten an, dass der Bediener 6 von links Werkstücke zur Bearbeitung entgegennimmt und diese nach rechts weitergibt.

Figur 3 zeigt ein weiteres Fertigungssystem 10, bei welchem die trapezförmigen Fertigungsträgermodule 1 noch flexibler angeordnet sind. Eine vorteilhafte Tiefe für das Fertigungsträgermodul 1 liegt bei 60 cm, jedoch können natürlich auch beliebige andere Abmessungen, beispielsweise zwischen 30 und 120 cm gewählt werden.

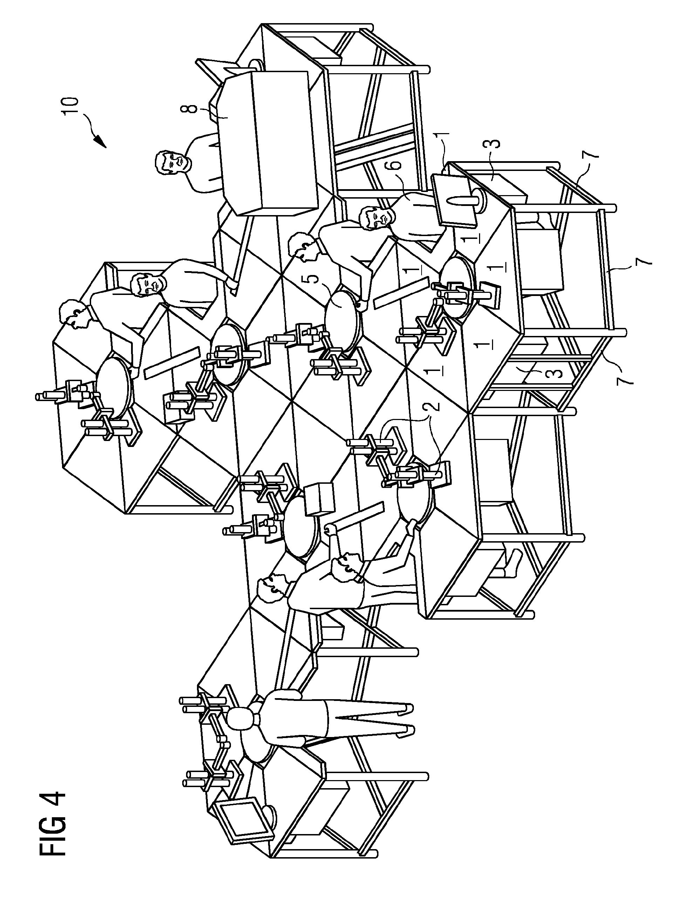

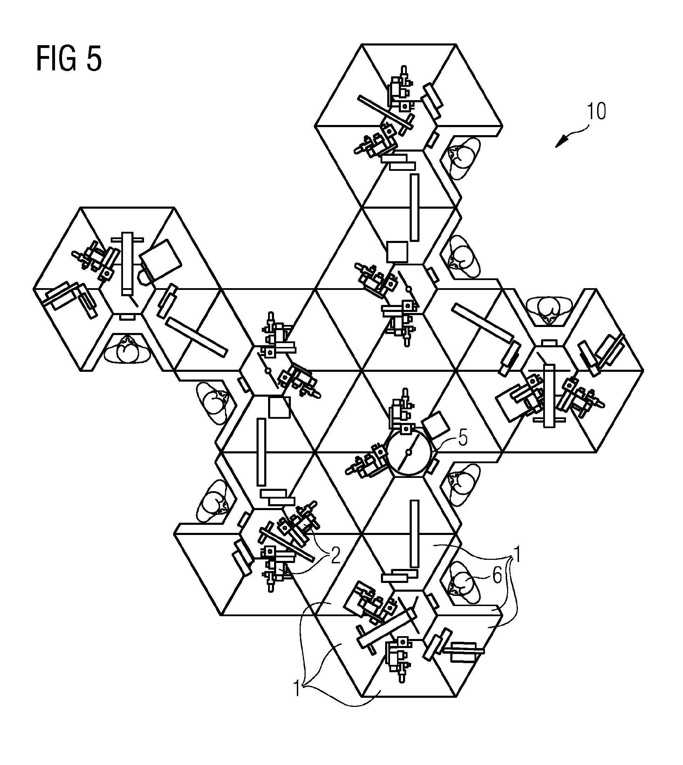

Figur 4 zeigt ein relativ komplexes Fertigungssystem 10, welches aus acht Drehtellersystemen zusammengesetzt ist, die jeweils aus einem Drehteller 5 bestehen, um welchen sechs trapezförmige Fertigungsträgermodule 1 angeordnet sind. Jeder Drehteller 5 wird durch einen Bediener 6 bedient, welcher an einem speziellen Fertigungsträgermodul 1 steht, welches durch eine Aussparung in einer Tischplatte einen leichteren Zugriff auf den Drehteller 5 ermöglicht. In Figur 4 sowie in Figur 5 sind zur besseren Übersichtlichkeit nur ausgewählte Komponenten mit Bezugszeichen versehen. So sind für das fordere Drehtellersystem sechs Fertigungsträgermodule 1 mit Bezugszeichen bezeichnet, während ein Drehteller 5, Fertigungseinheiten 2 und eine Schutzabdeckung 8 nur auf ausgewählten benachbarten Drehtellersystemen exemplarisch mit Bezugszeichen versehen sind. Die genannten Elemente befinden sich auf jedem der acht Drehtellersysteme, auch wenn sie nicht gesondert bezeichnet sind.

Figur 4 zeigt ferner unter jedem Fertigungsträgermodul 1 eine Stützkonstruktion 7, beispielsweise Tischbeine, an welcher auch Steuereinheiten 3 für auf dem jeweiligen Fertigungsträgermodul 1 montierte Fertigungseinheiten 2 angebracht sind.

Diese Steuereinheiten 3 verfügen über einheitliche Schnittstellen, sodass ein Fertigungsträgermodul 1, welches beispielsweise mit einer Schweißeinheit ausgerüstet ist, unmittelbar durch ein gleichartiges Fertigungsträgermodul 1 ausgetauscht werden kann. Die einheitlichen Schnittstellen haben auch den Vorteil, dass ohne größeren Aufwand Fertigungsträgermodule 1 durch Fertigungsträgermodule 1 mit anderer Funktionalität, d.h. anderen Fertigungseinheiten 2, ausgetauscht werden können.

Figur 4 zeigt unterschiedliche Fertigungseinheiten 2 auf den einzelnen Fertigungsträgermodulen 1, beispielsweise Schweißeinheiten, Bohreinheiten oder Lotbandvorschübe. Auch die aus Figur 4 ersichtlichen Computer-Bildschirme können hierbei als Fertigungseinheit verstanden werden, da sie den Prozess unterstützen.

Wie aus Figur 4 ersichtlich greift der Bediener 6 jeweils über den Drehteller 5 auf Fertigungseinheiten 2 zu, welche sich nicht auf dem Fertigungsträgermodul 1 befinden, an welchem der Bediener 6 steht. Vielmehr kann der Bediener 6 mittels des jeweiligen Drehtellers 5 auch die Fertigungseinheiten 2 auf den ihm gegenüberliegenden Fertigungsträgermodulen 1 bedienen. Der Arbeitsradius des Bedieners 6 wird dadurch deutlich erhöht.

Figur 4 zeigt ferner, wie flexibel die Fertigungsträgermodule 1 auch zu komplexen und großen Fertigungssystemen 10 zusammengesetzt werden können. Der Drehteller 5 bildet hierbei in Verbindung mit den umliegenden sechs Fertigungsträgermodulen 1 jeweils ein Drehtellersystem. Die acht in Figur 4 gezeigten Drehtellersysteme, welche in drei funktionelle Bereiche gegliedert sind, werden durch die acht Bediener 6 in einem Dreischichtsystem betrieben und erreichen dadurch eine hohe und ganzheitliche Prozesseffizienz. Die in Figur 4 gezeigte Lösung für das Fertigungssystem 10 ist dem Ideal sehr nahe, einen Fixkostenanteil pro produziertem Stück zu minimieren. Aufgrund der Universalität und Modularität der Fertigungsträgermodule 1 kann die gezeigte Konfiguration weiterhin in gestufter Weise auf- und abgebaut werden. Sollte der tatsächliche Kapazitätsbedarf die Leistungsfähigkeit des in Figur 4 gezeigten Fertigungssystems übersteigen, wird in gleicher Weise ein weiteres Fertigungssystem 10 aufgebaut. Das ganzheitliche, prozesseffiziente Fertigungssystem 10 muss also nicht verändert werden, sondern wird lediglich dupliziert. Unabhängig davon kann natürlich auch das vorliegende Fertigungssystem 10 beliebig angepasst oder umkonfiguriert werden, sofern dies erforderlich wird.

Figur 5 zeigt das in Figur 4 gezeigte Fertigungssystem 10 in einer Aufsicht. Die Ausführungen zu Figur 4 gelten hier analog.

Die beschriebenen Ausführungsformen und Weiterbildungen, Varianten und Ausführungsbeispiele lassen sich frei miteinander kombinieren.

## Patentansprüche

1. Fertigungsträgermodul (1),
**dadurch gekennzeichnet, dass**
- die Außenkanten des Fertigungsträgermoduls (1) ein symmetrisches Trapez bilden.

2. Fertigungsträgermodul (1) nach Anspruch 1,
- mit einer Fertigungseinheit (2), insbesondere einer Schweißeinheit, einem Lotbandvorschub oder einer Bohreinheit, welche auf dem Fertigungsträgermodul (1) montiert ist.

3. Fertigungsträgermodul (1) nach Anspruch 2,
- mit einer Steuereinheit (3), welche eine Steuerung der Fertigungseinheit (2) bereitstellt, und wobei die Steuereinheit (3) eine einheitliche Schnittstelle aufweist, sodass das Fertigungsträgermodul (1) durch ein Fertigungsträgermodul mit gleicher oder abweichender Funktionalität unmittelbar austauschbar ist.

4. Fertigungsträgermodul (1) nach Anspruch 3,
- mit einer Stützkonstruktion (7), auf welcher eine Aufnahmeplattform montiert ist, und an welcher die Steuereinheit (3) unterhalb der Aufnahmeplattform montiert ist.

5. Fertigungsträgermodul (1) nach Anspruch 4,
- bei dem die Aufnahmeplattform eine Tischplatte ist.

6. Fertigungsträgermodul (1) nach Anspruch 1,
- mit einer Stützkonstruktion (7), auf welcher eine Tischplatte montiert ist, und
- bei dem die Tischplatte eine Aussparung für einen Bediener (6) aufweist.

7. Fertigungsträgermodul (1) nach einem der vorangegangenen Ansprüche,
- mit Anschlussmitteln (4), welche so angeordnet sind, dass sie eine Verkettung des Fertigungsträgermoduls (1) mit weiteren Fertigungsträgermodulen sowohl in Linienform als auch in Wabenform erlauben.

8. Fertigungssystem (10),
- mit mehreren zu einer Wabenform verketteten Fertigungsträgermodulen (1) gemäß einem der Ansprüche 1-7, und
- mit einem zentral angeordneten Modul mit einem Drehteller (5), welcher einem Bediener (6) an einem ersten Fertigungsträgermodul des Fertigungssystems (10) eine Nutzung einer Fertigungseinheit (2), welche an einem zweiten Fertigungsträgermodul des Fertigungssystems (10) montiert ist, erlaubt.
